# EUROPÄISCHE PATENTANMELDUNG

(11) **EP 4 105 683 A1**
(43) Veröffentlichungstag der Anmeldung: **21.12.2022**
(21) Anmeldenummer: 22179497.7
(22) Anmeldetag: 17.06.2022
(51) Int. Cl.: G01S 7/481, B60Q 1/04, G01S 17/931, F21W 107/10, G01S 13/931

(54) **KRAFTFAHRZEUGBELEUCHTUNGSEINRICHTUNG**

(30) Priorität: 17.06.2021 DE 102021115721
(71) Anmelder: Marelli Automotive Lighting Reutlingen (Germany) GmbH, 72762 Reutlingen (DE)
(72) Erfinder: Licht, Martin, 72762 Reutlingen (DE); Brill, Johannes, 70567 Stuttgart (DE)
(74) Vertreter: DREISS Patentanwälte PartG mbB

(57) **Zusammenfassung**

Die Erfindung betrifft eine Kraftfahrzeugbeleuchtungseinrichtung mit einem LIDAR-Detektor (22) und einer Lichtquelle (32), die innerhalb eines Modulgehäuses (2) angeordnet sind, wobei dem LIDAR-Detektor (22) durch eine optische Linse (38) ein Laserstrahl zuleitbar ist, wobei mittels der Lichtquelle (32) sichtbares Licht durch die Linse (38) aus dem Modulgehäuse (2) herausleitbar ist, dadurch gekennzeichnet, dass innerhalb des Modulgehäuses (2) ein LIDAR-Emitter (10) angeordnet ist, mit dem der Laserstrahl emittierbar ist.

## Beschreibung

Die Erfindung betrifft eine Kraftfahrzeugbeleuchtungseinrichtung gemäß Patentanspruch 1.

Aus DE 10 2017 109 905 A1 ist bereits eine Kraftfahrzeugbeleuchtungseinrichtung gemäß dem Oberbegriff von Anspruch 1 bekannt. Diese Kraftfahrzeugbeleuchtungseinrichtung weist einen Scheinwerfer auf. Der Scheinwerfer weist eine Lichtquelle für sichtbares Licht, eine Infrarotstrahlungsquelle und eine Lichtaustrittsoptik auf, die eine von der Lichtquelle und der Infrarotstrahlungsquelle beleuchtete Lichteintrittsfläche und eine Lichtaustrittsfläche aufweist. Ein optisches Ausgangs-Umlenkelement, richtet von der Infrarotstrahlungsquelle ausgehende Infrarotstrahlung auf die Lichteintrittsfläche.

Im Rahmen von Fahrassistenzsystemen und dem autonomen Fahren werden immer mehr Sensoren am Fahrzeug angebracht. Optische Sensoren wie Kameras und LIDAR-Systeme können beispielsweise im Fahrgastinnenraum des Fahrzeugs oder auch in dessen Scheinwerfern angeordnet sein.

Aufgabe der Erfindung ist es, ein LIDAR-System in einer Kraftfahrzeugbeleuchtungseinrichtung unauffällig zu integrieren.

Diese Aufgabe wird mit den Merkmalen des Patentanspruchs 1 gelöst.

Bei der erfindungsgemäßen Kraftfahrzeugbeleuchtungseinrichtung sind ein LIDAR-Detektor und eine Lichtquelle innerhalb eines Modulgehäuses angeordnet. Dem LIDAR-Detektor ist durch eine optische Linse ein Laserstrahl zuleitbar. Mittels der Lichtquelle ist sichtbares Licht durch die Linse aus dem Modulgehäuse herausleitbar. Innerhalb des Modulgehäuses ist ein LIDAR-Emitter angeordnet, mit dem der Laserstrahl emittierbar ist. Mithin sind sowohl der LIDAR-Emitter des LIDAR-Systems, der LIDAR-Detektor und eine Lichtquelle optimal positioniert.

Die Lichtquelle für sichtbares Licht kann insbesondere eine Leuchtdiode sein oder aus mehreren Leuchtdioden bestehen.

Benachbart zur Lichtquelle kann eine Beleuchtung zur Ausleuchtung der Fahrstrecke angeordnet sein, die beispielsweise als Matrixlicht ebenfalls mit Leuchtdioden ausgeführt ist. Ein solcher Scheinwerfer erlaubt sowohl eine gute Ausleuchtung der Fahrstrecke als auch eine gute Erfassung von Objekten mittels LIDAR, d.h. der dahingehende Sensor zeigt eine gute Performance.

Besonders vorteilhaft ist es, wenn die Lichtquelle für sichtbares Licht eine Inszenierungsbeleuchtung bildet, deren Zweck es ist, für Außenstehende den Eindruck zu erwecken, dass es sich bei dem LIDAR-Detektor und/oder dem LIDAR-Emitter um eine herkömmliche Beleuchtungseinrichtung und/oder ein Standlicht handelt. Das Licht einer solchen Inszenierungsbeleuchtung "überstrahlt" somit den LIDAR-Detektor und/oder den LIDAR-Emitter.

Für Außenstehende ergibt sich somit ein Erscheinungsbild, das nahe bei heutigen Scheinwerfern ohne Sensoren liegt. Insoweit wird das heutige Design beibehalten und die Sensoren des LIDAR-Systems sind weitestgehend unauffällig integriert. Heutige Scheinwerfer weisen nämlich üblicherweise mehrere Lichtmodule auf. Dieses gewohnte und ästhetische Design wird durch die Integration des LIDAR-Systems nicht zu stark beeinflusst.

Mittels der Inszenierungsbeleuchtung wird sozusagen die Optik des LIDAR-Moduls mit sichtbarem Licht von innenheraus beleuchtet. Dabei bilden der LIDAR-Detektor und der LIDAR-Emitter jeweils eine von zwei LIDAR-Komponenten des LIDAR-Systems, wobei der einen Komponente und/oder der anderen Komponente die Lichtquelle als eine Art Inszenierungsbeleuchtung zugeordnet sein kann.

Eine solche Inszenierungsbeleuchtung kann sowohl für den LIDAR-Detektor als auch für den LIDAR-Emitter vorgesehen sein, um ein gleiches Erscheinungsbild zu gewährleisten.

Insofern kann die Kraftfahrzeugbeleuchtungseinrichtung zusätzlich zur Lichtquelle eine Beleuchtungseinrichtung für sichtbares Licht aufweisen, die insofern ein separates Bauteil von der Lichtquelle ist und die insbesondere als Tagfahrlicht oder Abblendlicht ausgebildet ist, wohingegen die Lichtquelle als Inszenierungsbeleuchtung und/oder als Positionslicht ausgeführt ist und/oder den Overhead-Wert und/oder das Tagfahrlicht unterstützt.

Um möglichst viel Licht der Lichtquelle vom LIDAR-Detektor wegzuleiten kann vorgesehen sein, dass das sichtbare Licht gegen eine Einrichtung gestrahlt wird, die das sichtbare Licht in Richtung von der einen Komponente weg und/oder zur Linse hin leitet und dass die Einrichtung vorzugsweise als Lichtleiterring und/oder als reflektierende Oberfläche der Blende und/oder als Linsenoberfläche einer Meniskuslinse ausgeführt ist. Dabei kann der Lichtstrahl insbesondere unter die Hell-Dunkel-Grenze geleitet und/oder reflektiert werden, sodass kaum Licht über der Hell-Dunkel-Grenze die besagten Overhead-Werte beeinträchtigt.

Im Allgemeinen kann die Lichtquelle zur Beleuchtung an einer beliebigen Stelle senkrecht zu einer optischen Achse angeordnet sein, also beispielsweise oben, unten aber auch seitlich von der optischen Achse. Die Anordnung kann beispielsweise aus Platzgründen vorgegeben sein.

Jedoch kann es auch andere Randbedingungen geben, nämlich gesetzliche Rahmenbedingungen. Die Lichtquelle muss nämlich nicht ausschließlich als Inszenierungsbeleuchtung genutzt werden. Die Lichtquelle kann zusätzlich die Ausleuchtung der Fahrbahn unterstützen und insbesondere als Abblend-, Stand- oder Parklicht ausgeführt sein. Dabei sind aber auch die gesetzlichen Vorgaben einzuhalten. Ein Beispiel für eine solche gesetzliche Vorgabe ist die Begrenzung der Helligkeit oberhalb über einer sogenannten Hell-Dunkel-Grenze. Sprich, die maximale Helligkeit in einer bestimmten Höhe, der sogenannten Overhead-Wert, kann auf ein Maß begrenzt sein, sodass einerseits reflektierende Straßenschilder noch ausgeleuchtet werden, andererseits jedoch keine Menschen auf Augenhöhe geblendet werden.

Eine Möglichkeit, um vorrangig den Raum unterhalb der Hell-Dunkel-Grenze auszuleuchten ist es, die Lichtquelle in Einbaulage des Modulgehäuses oberhalb einer optischen Achse der Linse anzuordnen. Dabei braucht in Richtung der optischen Achse zwischen der Linse und der Lichtquelle keine weitere Linse angeordnet sein.

Um den LIDAR-Detektor zu verbergen, kann die Lichtquelle zwischen dem LIDAR-Detektor und der Linse angeordnet sein.

Um den LIDAR-Detektor besonders effektiv vor unerwünschtem Streulicht zu schützen, das von der Lichtquelle und/oder der Sonne auf dem LIDAR-Detektor auftrifft, kann ein Bandpassfilter vor dem LIDAR-Detektor vorgesehen sein. Insbesondere kann vorgesehen sein, dass der Laserstrahl von der Linse zum LIDAR-Detektor innerhalb eines Raumes geführt wird, der von dem Bandpassfilter in einen Detektionsraum und einen Beleuchtungsraum aufgeteilt wird, wobei der Bandpassfilter für den Laserstrahl transparent ist und für das Licht der Lichtquelle undurchlässig ist.

Außerdem oder stattdessen kann zum Schutz des LIDAR-Detektor vor unerwünschtem Streulicht eine Blende vor dem LIDAR-Detektor vorgesehen sein. Insbesondere kann vorgesehen sein, dass der Laserstrahl von der Linse zum LIDAR-Detektor innerhalb eines Raumes geführt wird, der von einer Blende in einen Blendenhinterraum mit dem LIDAR-Detektor und einen Vorblendenraum ohne den LIDAR-Detektor aufgeteilt wird, und dass zumindest der größte Anteil des sichtbaren Lichts aus dem Vorblendenraum durch die Linse herausleitbar ist.

Streulicht in Richtung des LIDAR-Detektor kann auch mittels eines Rohrs vermindern/verhindert werden. Ein solches Rohr muss nicht zwangsläufig ein kreisrunder Tubus sein, sondern kann im Querschnitt auch oval sein. Ferner kann das Rohr in der Art eines Vierkantrohrs rechteckig sein oder eine andere hohle Polygonform aufweisen. Insofern kann vorgesehen sein, dass die erste Komponente und die Linse von dem undurchsichtigen Rohr umfasst sind und dass die Lichtquelle einen für sichtbares Licht transparenten Bereich, insbesondere eine Ausnehmung, aufweist, und dass die Lichtquelle derart außerhalb einer Innenfläche des Rohrs angeordnet ist, dass das sichtbare Licht durch den transparenten Bereich in einen Raum innerhalb des Rohrs gestrahlt und/oder geleitet werden kann.

Je weiter der LIDAR-Emitter und der LIDAR-Detektor voneinander entfernt sind, desto ungenauer werden die Positionsdaten der zu ermittelnden Hindernisse/Objekte bestimmt. Das liegt daran, dass sich die Verbindungsbauteile zwischen dem LIDAR-Emitter und der LIDAR-Detektor wegen Temperaturschwankungen und Schwindungen/Stößen verformen. Insofern ist die LIDAR-Messung besonders genau, wenn vorgesehen ist, dass der LIDAR-Detektor und der LIDAR-Emitter nebeneinander an einem gemeinsamen LIDAR-Modul ausgebildet sind, und dass der LIDAR-Emitter als solid-state-LIDAR-Emitter insbesondere mit einem mikroelektromechanischen Chip ausgeführt ist.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden.

Es zeigen:
Fig. 1 eine Kraftfahrzeugbeleuchtungseinrichtung, die ein LIDAR-Modul aufweist,
Fig. 2 in vier verschiedenen Ansichten als Einzelteil das LIDAR-Modul aus Fig. 1, das eine Detektoreinheit aufweist,
Fig. 3 schematisch die Detektoreinheit aus Fig. 2,
Fig. 4 ein alternatives Ausführungsbeispiel der Detektoreinheit,
Fig. 5 ein weiteres alternatives Ausführungsbeispiel der Detektoreinheit, und
Fig. 6 ein weiteres alternatives Ausführungsbeispiel der Detektoreinheit.

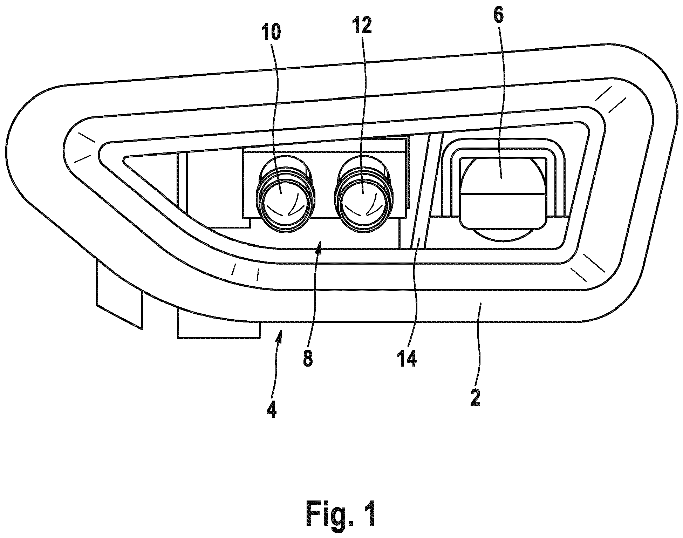

Fig. 1 zeigt ein Modulgehäuse 2 einer Kraftfahrzeugbeleuchtungseinrichtung 4, die auch noch eine oder mehrere weitere zeichnerisch nicht näher dargestellte Beleuchtungsmodule aufweisen kann. Das Modulgehäuse 2 ist insbesondere ein Scheinwerfermodul oder ein Rückleuchtenmodul und insofern an der Front oder dem Heck eines Kraftfahrzeugs angebracht. Im Modulgehäuse 2 ist eine Beleuchtungseinrichtung 6 angeordnet, die eine Linsenoptik aufweist und als Abblendlicht und/oder als Fernlicht und/oder als Rücklicht und/oder als Rückfahrlicht und/oder als Bremslicht und/oder als Blinklicht und/oder als Matrixscheinwerfer ausgebildet ist. Insofern wird mittels sichtbaren Lichts der Beleuchtungseinrichtung 6 die

Fahrbahn ausgeleuchtet und/oder Verkehrsteilnehmern werden Position und/oder Fahrtrichtung und/oder weitere Informationen über das Kraftfahrzeug angezeigt.

Die Beleuchtungseinrichtung 6 ist innerhalb des Modulgehäuses 2 neben einem LIDAR-Modul 8 angeordnet, das einen LIDAR-Emitter 10 und eine Detektoreinheit 12 umfasst. Das LIDAR-Modul 8 ist derart von der Beleuchtungseinrichtung 6 getrennt, dass deren sichtbares Licht innerhalb des Modulgehäuses 2 nicht direkt zum LIDAR-Modul 8, insbesondere deren Detektoreinheit 12 gelangen kann. Dazu ist zum einem der Strahlengang des sichtbaren Lichts der Beleuchtungseinrichtung 6 entsprechend ausgebildet. Zum anderen ist eine Trennwand 14 zwischen der Beleuchtungseinrichtung 6 und dem LIDAR-Modul 8 angeordnet.

Mit dem LIDAR-Emitter 10 des LIDAR-Moduls 8 ist ein Laserstrahl emittierbar, dessen Wellenlänge im Infrarotlichtbereich, im Nahe-Infrarotlichtbereich (NIR) oder im ultravioletten Bereich liegt. Der Laserstrahl wird aus dem Modulgehäuse 2 herausgeleitet und von Oberflächen reflektiert bzw. gestreut, die im Strahlengang des Laserstrahls liegen. Mit der Detektoreinheit 12 wird der zurückgestreute Laserstrahl detektiert. Anhand der Laufzeit des Laserstrahls wird der Abstand der Oberfläche des Objekts bestimmt, von dem der rückgestreute Laserstrahl ausgeht. In dem Kraftfahrzeug wird somit das LIDAR-Modul 8 benutzt, um Personen und Objekte im Umfeld des Kraftfahrzeugs zu erkennen und ihren Abstand zu bestimmen.

Es lässt sich ein dreidimensionales Bild von der Umgebung berechnen.

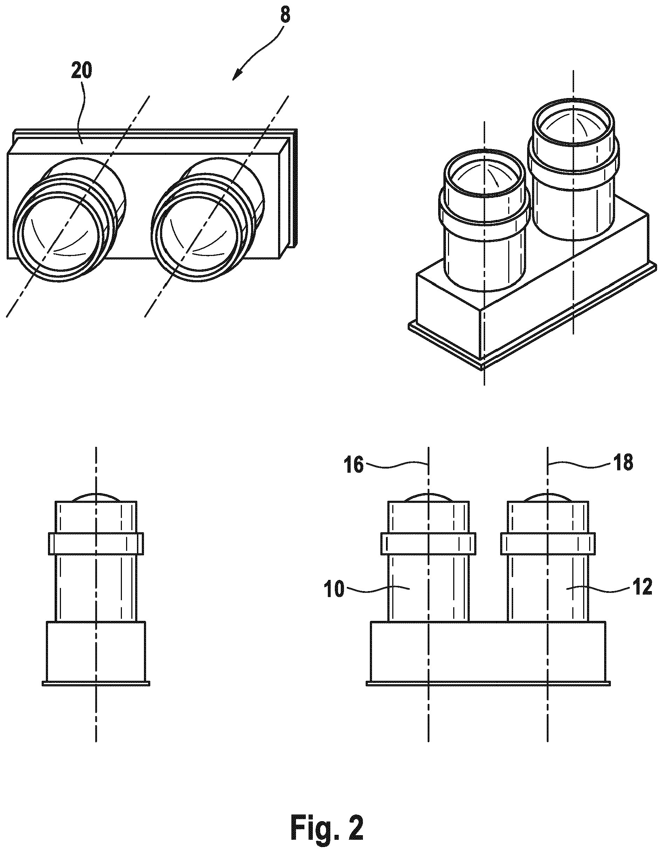

Fig. 2 zeigt in vier Ansichten das LIDAR-Modul 8 als Einzelteil. Die Detektoreinheit 12 und der LIDAR-Emitter 10 sind nebeneinander ausgebildet. Eine Längsachse 16 des LIDAR-Emitters 10 und eine optische Achse 18 der Detektoreinheit 12 sind nahezu parallel zueinander ausgerichtet. Der LIDAR-Emitter 10 und die Detektoreinheit 12 sind bewegungsfest an eine Platine 20 festgeschraubt, sodass der LIDAR-Emitter 10 und die Detektoreinheit 12 fest miteinander verbunden sind, d.h. gegeneinander unbeweglich sind. Die Platine 20 umfasst zudem eine Steuerungseinheit des LIDAR-Emitters 10 und eine Auswerteelektronik der Detektoreinheit 12.

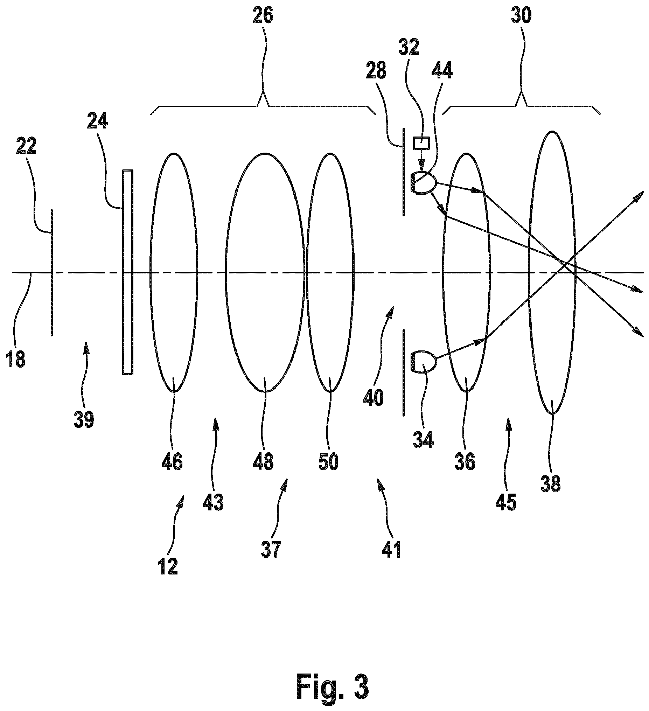

Der LIDAR-Emitter 10 und ein aus Fig. 3 ersichtlicher LIDAR-Detektor 22 der Detektoreinheit 12 bilden zwei LIDAR-Komponenten eines LIDAR-Systems.

Dabei zeigt Fig. 3 schematisch die Detektoreinheit 12 bzw. deren Strahlengang, wobei beispielhaft eine ebenfalls dargestellte Inszenierungsbeleuchtung erläutert wird. Eine solche Inszenierungsbeleuchtung könnte jedoch auch an dem LIDAR-Emitter 10 angeordnet sein.

Der LIDAR-Detektor 22 ist als Matrix-Detektor ausgeführt. Dieser Matrix-Detektor kann insbesondere als Solid-State-Detektor ausgeführt sein und einen CCD-Chip, einen CMOS-Detektor oder einen ähnlichen Chip aufweisen.

In Richtung der optischen Achse 18 schließen sich dem LIDAR-Detektor 22 axial aufeinander folgend ein Bandpassfilter 24, eine Optikeinrichtung 26, eine Blende 28 sowie ein Objektiv 30 an. Zwischen der Blende 28 und dem Objektiv 30 sind zudem eine Lichtquelle 32 und ein Lichtleiterring 34 angeordnet. Insofern sind die Lichtquelle 32 und der Lichtleiterring 34 zwischen dem LIDAR-Detektor 22 und dem Objektiv 30 angeordnet, das von zwei unterschiedlichen optischen Linsen 36, 38 gebildet wird. Der Laserstrahl wird von den Linsen 36, 38 zum LIDAR-Detektor 22 innerhalb eines Raumes 37 geführt. Dieser Raum 37 wird von dem Bandpassfilter 24 in einen Detektionsraum 39 und einen Beleuchtungsraum 41 aufgeteilt. Außerdem wird der besagte Raum 37 von der Blende 28 in einen Blendenhinterraum 43 mit dem LIDAR-Detektor 22 und einen Vorblendenraum 45 ohne den LIDAR-Detektor 22 aufgeteilt. In dem Vorblendenraum sind das Objektiv 30, die Lichtquelle 32 und der Lichtleiterring 34 angeordnet. In dem Blendenhinterraum 43 sind die Optikeinrichtung 26 und der Bandpassfilter 24 angeordnet. Zumindest der größte Anteil des sichtbaren Lichts der Lichtquelle 32 ist aus dem Vorblendenraum 45 durch die Linse 38 herausleitbar.

Dazu wird das Licht der Lichtquelle 32 in den Lichtleiterring 34 eingeleitet, welcher im seitlichen Schnitt nur mit seiner Querschnittfläche zu sehen ist. Die Lichtquelle 32 ist radial außerhalb des Lichtleiterrings 34 angeordnet. Die Lichtquelle 32 und der Lichtleiterring 34 sind benachbart zueinander in einer gemeinsamen Ebene angeordnet. Der Lichtleiterring 34 ist in Richtung der optischen Achse 18 zum Objektiv 30 hin und versetzt zur Blende 28 angeordnet. Der Lichtleiterring 34 ist koaxial zu einer Blendenöffnung 40 angeordnet und kreisförmig. Der Lichtleiterring 34 weist auf seiner der Blende 28 zugewandten Seite Prismen 44 auf, die das sichtbare Licht aus dem Lichtleiterring 34 nach vorne aus dem Objektiv 30 herausleiten, sodass das Objektiv 30 für außenstehende Betrachter des Kraftfahrzeugs leuchtend erscheint.

Insofern ist die Detektoreinheit 12 mit ihrem Objektiv 30, in dem LIDAR-Modul 8 (Fig. 2) neben der Beleuchtungseinrichtung 6 ohne Bruch der Designsprache integriert. Die Detektoreinheit 12 ist so integriert, dass sie auf den ersten Blick wie eine weitere Beleuchtungseinrichtung wahrgenommen wird. Insofern wird mittels der Lichtquelle 32 und dem Lichtleiterring 34 die besagte Inszenierungsbeleuchtung geschaffen. Eine weitere Inszenierungsbeleuchtung ist vorzugsweise auch im Bereich des LIDAR-Emitters 10 angeordnet, sodass sich auch dieser für den außenstehenden Betrachter in das Design einer Kraftfahrzeugbeleuchtung einfügt.

Weiter mit Bezug auf Fig. 3 weist die Optikeinrichtung 26 mehr Linsen auf als das Objektiv 30. Die Optikeinrichtung 26 umfasst bei diesem Ausführungsbeispiel drei unterschiedliche Linsen 46, 48, 50, die insofern zwischen der Blende 28 und dem Bandpassfilter 24 angeordnet sind. Mithin ist der in die Optik 30 einfallende Laserstrahl dem LIDAR-Detektor 22 durch die fünf optischen Linsen 38, 36, 50, 48, 46, der Blende 28 und dem Bandpassfilter 24 zuleitbar. Der Bandpassfilter 24 ist dazu für den Laserstrahl durchlässig. Bei einem bevorzugten Ausführungsbeispiel liegt die Wellenlänge des Laserstrahls im Nahe-Infrarotlichtbereich, der zwischen 800nm und 1500nm liegt. Insofern ist der Bandpassfilter 24 bei diesem Ausführungsbeispiel für eine solche Wellenlänge durchlässig. Durch die Einschränkung der Durchlässigkeit auf diesen Wellenbereich wird verhindert, dass auf den LIDAR-Detektor 22 auch Streulicht der Inszenierungsbeleuchtung auftreffen kann. Insofern ist der Bandpassfilter 24 für sichtbare Strahlung nicht durchlässig.

Um die Menge dieses Streulicht zu minimieren sind die Blende 28 und das Objektiv 30 so ausgestaltet, dass möglichst wenig Licht der Lichtquelle 32 durch die Blendenöffnung 40 zum LIDAR-Detektor 22 kann. Vorzugsweise sind die Blende 28 und das Objektiv 30 so ausgestaltet, dass überhaupt kein Licht der Lichtquelle 32 durch die Blendenöffnung 40 zum LIDAR-Detektor 22 kann.

Bei einer alternativen Ausgestaltungform ist der Bandpassfilter 24 innerhalb der Blendenöffnung 40 angeordnet. Überdies kann der Bandpassfilter 24 anstelle der Blende 28 vorgesehen sein. D.h., der Bandpassfilter 24 ist dann entweder zwischen der Optikeinrichtung 26 und dem Objektiv 30 angeordnet oder es ist keine Optikeinrichtung 26 vorgesehen.

Bei einer weiteren alternativen Ausgestaltung weisen die Linsenoberflächen der Linsen des Objektivs 30 und/oder der Optikeinrichtung 26 für eine optimierte Transmission des Laserstrahls eine Antireflexionsbeschichtung auf, die Reflexionen des Laserstrahls verhindert. D.h., infolge der Antireflexionsbeschichtung wird Strahlung in der Wellenlänge des Lasers weniger an der Oberfläche der betreffenden Linse reflektiert. Demgegenüber ist jedoch eine stärkere Reflexion des sichtbaren Lichts der Lichtquelle bzw. der Inszenierungsbeleuchtung gewünscht. Um dabei zu verhindern, dass die Antireflexionsbeschichtung für den Laserstrahl auch Rückreflexionen des sichtbaren Lichts der Lichtquelle 32 reduziert, ist die Antireflexionsbeschichtung der betreffenden Linse derart ausgestaltet, dass sie selektiv nur für die Wellenlänge des Laserstrahls einen Antireflexionseffekt aufweist und hingegen einen reduzierten Antireflexionseffekt für das sichtbare Licht, bzw. im Bereich des Spektrums der Lichtquelle 32 aufweist.

Ist dies aus konstruktiven Gründen nicht für alle Linsen 46, 48, 50, 36, 38 möglich oder beispielsweise aus Kostengründen oder anderen Gründen nur schwer vermarktbar, so sind nur die Linsen 36, 38, die vom LIDAR-Detektor 22 am weitesten entfernt sind, mit einer Antireflexionsbeschichtung versehen, die einen reduzierten Antireflexionseffekt für das sichtbare Licht, bzw. im Bereich des Spektrums der Lichtquelle 32 aufweist. Für das Ausführungsbeispiel nach Fig. 3 bedeutet das, dass nur die Linsen 36, 38 des Objektivs 30 eine solche spezielle Antireflexionsbeschichtung aufweisen, die sichtbares Licht stärker reflektiert als den Laserstrahl des LIDAR-Emitters 10.

Alternativ ist es auch möglich, die Linsen 46, 48, 50, die auf der axial dem LIDAR-Detektor 22 zugewandten Seite der Lichtquelle 32 liegen, mit einer kostengünstigen Antireflexionsbeschichtung auszuführen, die auch für sichtbares Licht einen reduzierten Antireflexionseffekt aufweist, wohingegen die Linsen 36, 38, die auf der axial vom LIDAR-Detektor 22 abgewandten Seite der Lichtquelle liegen, überhaupt keine Antireflexionsbeschichtung aufweisen. Beim Ausführungsbeispiel nach Fig. 3 wären diese Linsen ohne Antireflexionsbeschichtungen die Linsen 36, 38 des Objektivs 30, wohingegen die Linsen 46, 48, 50 der Optikeinrichtung 26 eine Antireflexionsbeschichtung aufweisen, die sowohl für Laserstrahlen als auch für sichtbares Licht reflektionsmindernd ist.

Bei einer Weiterbildung diese Ausführungsform weist ausschließlich die äußerste Linse 38 keine Antireflexionsbeschichtung auf.

Bei einer weiteren Ausführungsform weist ausschließlich die äußerste Linse 38 eine Antireflexionsbeschichtung auf, die sichtbares Licht stärker reflektiert als den Laserstrahl, wobei die Antireflexionsbeschichtung den Laserstrahl besser durchlässt als wenn keine Antireflexionsbeschichtung vorhanden wäre. Bei dieser Ausführungsform ist die Lichtquelle 32 neben bzw. unmittelbar hinter der das Objektiv 30 abschließenden äußersten Linse 38 angeordnet. Insofern kann die Lichtquelle 32 außerhalb des Objektivs oder sogar außerhalb der Detektoreinheit 12 vorgesehen sein.

Bei einer weiteren Ausführungsform ist die Blende 28 auf Ihrer vom LIDAR-Detektor 22 abgewandten Seite mit einer reflektierenden bzw. spiegelnden Oberfläche ausgeführt. Dadurch kann die Effizienz der Inszenierungsbeleuchtung erhöht werden. Die dem LIDAR-Detektor 22 zugewandte Seite der Blende ist hingegen schwarz ausgeführt, um Streulicht und Marginal-Randstrahlen welche die Abbildungsqualität des Objektivs ansonsten verschlechtern würden, zu absorbieren. Zwischen der Blende 28 und dem LIDAR-Detektor 22 können weitere Blenden vorgesehen sein, die aus vorstehend genanntem Grund beidseitig schwarze Oberflächen aufweisen.

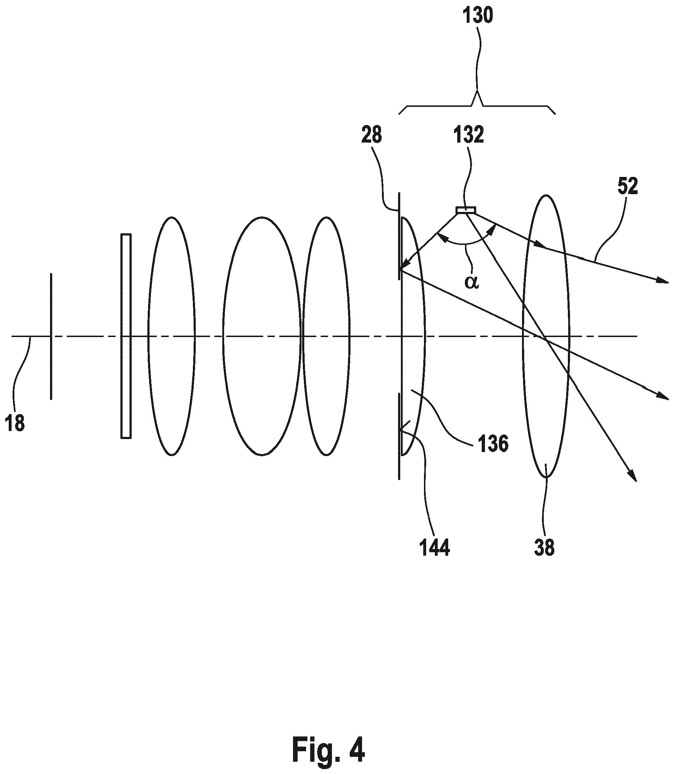

Fig. 4 zeigt eine Ausführungsform, bei der die Blende 28 sehr dicht bei der unmittelbar benachbarten Linse 136 des Objektivs 130 angeordnet ist. Im Gegensatz zum Ausführungsbeispiel nach Fig. 3 ist kein Lichtleitring vorgesehen. Die Lichtquelle 132 hat im Verhältnis zur Lichtquelle 132 nach Fig. 3 einen relativ großen Abstrahlwinkel α mit einer Lichtkegelachse, die nahezu senkrecht zur optischen Achse 18 steht. Insofern wird sichtbares Licht von der Lichtquelle 132 sowohl in Richtung der Blende 28 als auch in Richtung der äußersten Linse 38 geworfen. Wie anhand von drei Pfeilen in Fig. 4 dargestellt ist, wird sichtbares Licht von der äußersten Linse 38 gebrochen nach außen geleitet, sodass die äußerste Linse 38 dem Betrachter von außen als Teil einer Fahrzeugbeleuchtung erscheint. Das nach außen geleitete sichtbare Licht wird zu einem Teil direkt von der Lichtquelle 132 in Richtung der Linse 38 geworfen. Zu einem anderen Teil wird das sichtbare Licht von einer reflektierenden und/oder spiegelnden Oberfläche 144 der Blende 28 zu der äußersten Linse 38 reflektiert.

Die Inszenierungsbeleuchtung nach Fig. 4 kann das Abblendlicht unterstützen. Dabei sind jedoch gesetzliche Anforderungen an die Hell-Dunkel-Grenze bzw. die eingangs genannten Overhead-Werte einzuhalten.

Insbesondere, wenn das Abblendlicht von der Inszenierungsbeleuchtung unterstützt wird, ist es besonders vorteilhaft, wenn die Lichtquelle 132 hinter der äußersten Linse 38 angeordnet ist und in Einbaulage der Kraftfahrzeugbeleuchtungseinrichtung von oben beleuchtet. Insbesondere kann die Lichtkegelachse die optische Achse 18 kreuzen.

Zur Unterstützung des Abblendlichts durch die Inszenierungsbeleuchtung kann auch ein Lichtleiter Anwendung finden, der jedoch im Gegensatz zum Lichtleiterring nach Fig. 3 ausschließlich oberhalb der optischen Achse 18 angeordnet ist uns sich mithin in der oberen Hälfte des Objektivs 130 befindet. Die Lichtquelle ist bei dieser zeichnerisch nicht dargestellten Ausführungsform so angeordnet, dass das sichtbare Licht das direkt von der Lichtquelle kommt oder von der Oberfläche der Blende reflektiert wird und von der Linse bevorzugt in derart in den unteren Halbraum abgestrahlt wird, dass vorrangig oder ausschließlich Licht in die Hell-Dunkel-Grenze abgestrahlt wird. Dadurch wird erreicht, dass kaum Licht über der Hell-Dunkel-Grenze die Overheadwerte beeinträchtigt.

Vorzugsweise ist die Brennweite der Linse 136 des Objektivs 130, die der Blende 28 am nächsten steht, größer als der Abstand der Lichtquelle 132 zu der äußersten Linse 38. Es wird also ein virtuelles Bild der Lichtquelle 132 erzeugt. Die Lichtquelle 132 ist also mit einem derart großen Abstand zur optischen Achse 18 angeordnet, dass ein von der Lichtquelle 132 ausgehender oberster Randstrahl 52 von der äußersten Linse 38 noch unter die Hell-Dunkel-Grenze gelenkt wird.

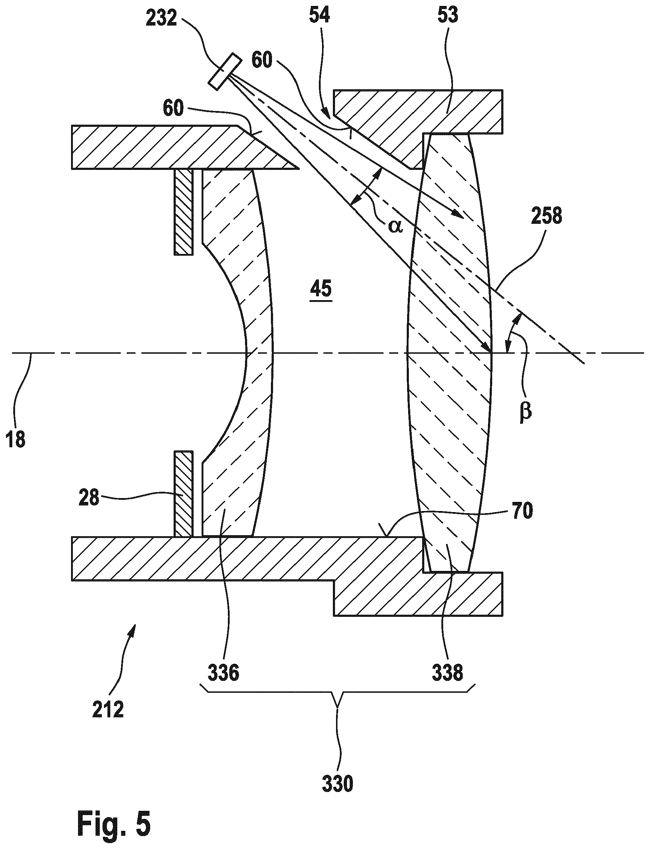

Fig. 5 zeigt eine alternative Ausführungsform, bei der die Linsen 236, 238 des Objektivs 230 in einem Rohr 53 aus lichtundurchlässigem Kunststoff oder Metall umfasst sind, sodass die Linsen 236, 238 radial nach außen und nach innen hin intransparent abgedeckt sind. Das Rohr 53 ist als Tubus ausgeführt, könnte jedoch auch oval oder eckig ausgeführt sein. Die Lichtquelle 232 weist einen für sichtbares Licht transparenten Bereich auf, der im Ausführungsbeispiel als Ausnehmung 54 ausgeführt ist. Die Lichtquelle 232 ist derart außerhalb des Rohrs 53 angeordnet, dass das sichtbare Licht durch den transparenten Bereich 54 in einen Raum innerhalb des Rohrs 53 gestrahlt und/oder geleitet wird. Dieser Raum wird von dem Vorblendenraum 45 gebildet.

Durch entsprechende Ausgestaltung eines Lichtdurchlassquerschnitts des transparenten Bereichs 54 kann die Beleuchtung an die spezifischen Anforderungen der Detektoreinheit 212 angepasst werden. Beispielsweise kann der Abstrahlwinkel α der Lichtquelle 232 auf die äußerste Linse 238 begrenzt werden. Dazu ist der transparente Bereich 54 als Öffnung ausgestaltet, die schräg in einer Wand des Rohrs 53 verläuft. Von außen ausgehend verläuft diese schräge Ausnehmung in Richtung zum vorderen Ende des Rohrs 53 bzw. in Richtung auf die Linse 238.

Der transparente Bereich im Rohr 53 ist dabei bevorzugt so ausgestaltet, dass ausschließlich die äußerste Linse 238 beleuchtet wird, nicht jedoch die der Blende 28 näher stehende Linse 236. Dazu strahlt die Lichtquelle 232 das sichtbare Licht unter einem definierten Bestrahlungswinkel β ab, der spitz ist und der zwischen einer Lichtkegelachse 258 der Lichtquelle 232 und der optischen Achse 18 eingeschlossen wird. Der Bestrahlungswinkel β ist so klein, dass dessen Scheitelpunkt vor der äußersten Linse 238 und mithin außerhalb des Objektivs 230 liegt.

Überdies kann eine Innenwand 60 eines Öffnungskanals des transparenten Bereichs 54 je nach Anforderung für sichtbares Licht absorbierend oder spiegelnd ausgeführt sein. Die der Blende 28 unmittelbar benachbarte Linse 236 des Objektivs 230 ist als Meniskuslinse ausgeführt.

Die beiden Linsen 236, 238 des Objektivs 230 weisen unterschiedliche Außendurchmesser auf. Die äußere Linse 238 weist einen größeren Außendurchmesser als die Meniskuslinse auf. Korrespondierend dazu weist das Rohr 53 unterschiedliche Innendurchmesser an dessen Innenfläche 70 auf.

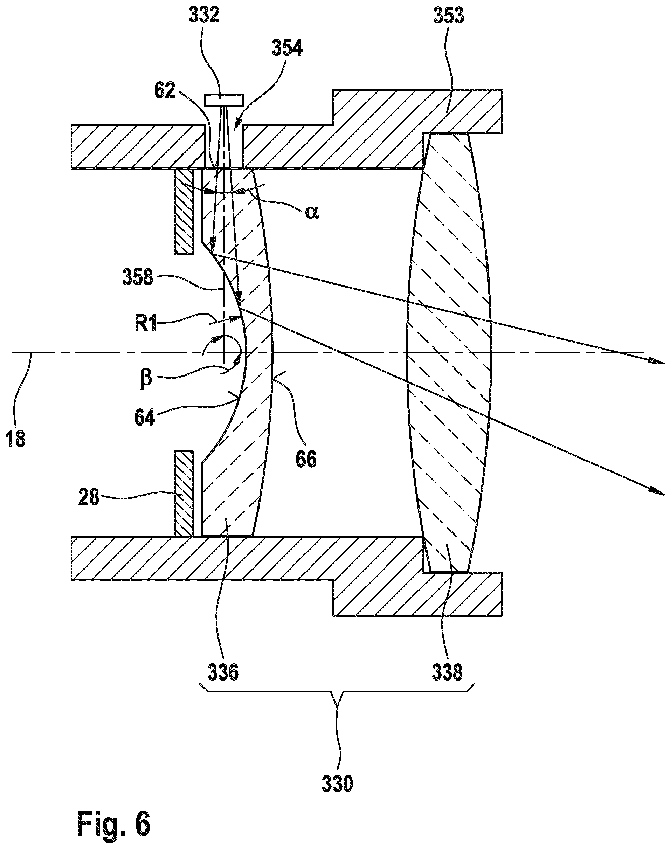

Auch bei der Weiterbildung nach Fig. 6 ist eine Meniskuslinse vorgesehen. Im Gegensatz zum Ausführungsbeispiel nach Fig. 5 ist der Bestrahlungswinkel β jedoch nicht spitz. Stattdessen beträgt der Bestrahlungswinkel β vorzugsweise zumindest ungefähr 90°. Der zugehörige Scheitelpunkt liegt innerhalb der Optik 330. Die Kegelachse 358 des Lichtkegels mit dem Abstrahlwinkel α ist mithin senkrecht zur optischen Achse 18 ausgerichtet. Die Lichtquelle 332 strahlt durch den transparenten Bereich 354 des Rohrs 353 an der Mantelfläche 62 bzw. Linsenseitenfläche der Meniskuslinse sichtbares Licht in die Meniskuslinse ein.

Die der Blende 28 zugewandte Oberfläche 64 der Meniskuslinse hat einen kleineren Krümmungsradius R1 als die gegenüberliegende Oberfläche 66 der Meniskuslinse. Das von der Lichtquelle 332 eingestrahlte Licht wird an der Grenzfläche der Oberfläche 64 mit dem kleineren Krümmungsradius R1 zur Luft totalreflektiert und insofern in Richtung der äußeren Linse 338 umgelenkt. Das Licht tritt an der äußeren Linse 338 unterhalb der Herr-Dunkel-Grenze aus.

Insofern wird das sichtbare Licht beim Ausführungsbeispiel nach Fig. 6 im Gegensatz zum vorhergehenden Ausführungsbeispiel nicht von der Lichtquelle 332 direkt in die äußerste Linse 338 eingestrahlt. Stattdessen wird das Licht über eine weitere Komponente des Objektivs 330 zur äußersten Linse 338 hin umgelenkt.

## Patentansprüche

1. Kraftfahrzeugbeleuchtungseinrichtung mit einem LIDAR-Detektor (22) und einer Lichtquelle (32), die innerhalb eines Modulgehäuses (2) angeordnet sind, wobei dem LIDAR-Detektor (22) durch eine optische Linse (38) ein Laserstrahl zuleitbar ist, wobei mittels der Lichtquelle (32) sichtbares Licht durch die Linse (38) aus dem Modulgehäuse (2) herausleitbar ist, **dadurch gekennzeichnet, dass** innerhalb des Modulgehäuses (2) ein LIDAR-Emitter (10) angeordnet ist, mit dem der Laserstrahl emittierbar ist.

2. Kraftfahrzeugbeleuchtungseinrichtung nach Anspruch 1, **dadurch gekennzeichnet, dass** der LIDAR-Detektor (22) und der LIDAR-Emitter (10) jeweils eine von zwei LIDAR-Komponenten des LIDAR-Systems bilden, wobei der einen Komponente und/oder der anderen Komponente die Lichtquelle (32) als eine Art Inszenierungsbeleuchtung zugeordnet ist.

3. Kraftfahrzeugbeleuchtungseinrichtung nach einem der vorhergehenden Ansprüche, **dadurch gekennzeichnet, dass** die Lichtquelle (32) zwischen der einen LIDAR-Komponente und der Linse (38) angeordnet ist.

4. Kraftfahrzeugbeleuchtungseinrichtung nach einem der vorhergehenden Ansprüche, **dadurch gekennzeichnet, dass** das sichtbare Licht gegen eine Einrichtung gestrahlt wird, die das sichtbare Licht in Richtung von der einen Komponente weg und/oder zur Linse (38) hin leitet und dass die Einrichtung vorzugsweise als Lichtleiterring (34) und/oder als reflektierende Oberfläche (144) einer Blende (28) und/oder als Linsenoberfläche (64) einer Meniskuslinse ausgeführt ist.

5. Kraftfahrzeugbeleuchtungseinrichtung nach einem der vorhergehenden Ansprüche, **dadurch gekennzeichnet, dass** der Laserstrahl von der Linse (38) zum LIDAR-Detektor (22) innerhalb eines Raumes (37) geführt wird, der von einem Bandpassfilter (24) in einen Detektionsraum (39) und einen Beleuchtungsraum (41) aufgeteilt wird, wobei der Bandpassfilter (24) für den Laserstrahl transparent ist und für das Licht der Lichtquelle (32) undurchlässig ist.

6. Kraftfahrzeugbeleuchtungseinrichtung nach einem der vorhergehenden Ansprüche, **dadurch gekennzeichnet, dass** der Laserstrahl von der Linse (38) zum LIDAR-Detektor (22) innerhalb eines Raumes (37) geführt wird, der von einer Blende (28) in einen Blendenhinterraum (43) mit dem LIDAR-Detektor (22) und einen Vorblendenraum (45) ohne den LIDAR-Detektor (22) aufgeteilt wird, und dass zumindest der größte Anteil des sichtbaren Lichts aus dem Vorblendenraum (45) durch die Linse (38) herausleitbar ist.

7. Kraftfahrzeugbeleuchtungseinrichtung nach einem der Ansprüche 2 bis 6, **dadurch gekennzeichnet, dass** die eine Komponente und die Linse (38) von einem undurchsichtigen Rohr (53) umfasst sind und dass die Lichtquelle (232) einen für sichtbares Licht transparenten Bereich (54), insbesondere eine Ausnehmung, aufweist, und dass die Lichtquelle (232) derart außerhalb einer Innenfläche (70) des Rohrs (53) angeordnet ist, dass das sichtbare Licht durch den transparenten Bereich (54) in einen Raum (45) innerhalb des Rohrs (53) gestrahlt und/oder geleitet werden kann.

8. Kraftfahrzeugbeleuchtungseinrichtung nach einem der vorhergehenden Ansprüche, **dadurch gekennzeichnet, dass** die Lichtquelle (32) in Einbaulage des Modulgehäuses (2) oberhalb einer optischen Achse (18) der Linse (38) angeordnet ist, wobei in Richtung der optischen Achse (18) zwischen der Linse (38) und der Lichtquelle (32) keine weitere Linse angeordnet ist.

9. Kraftfahrzeugbeleuchtungseinrichtung nach einem der vorhergehenden Ansprüche, **dadurch gekennzeichnet, dass** der LIDAR-Detektor (22) und der LIDAR-Emitter (10) nebeneinander an einem gemeinsamen LIDAR-Modul (8) ausgebildet sind, und dass der LIDAR-Emitter (10) als Solid-State-LIDAR-Emitter insbesondere mit einem mikroelektromechanischen Chip ausgeführt ist.

10. Kraftfahrzeugbeleuchtungseinrichtung nach einem der vorhergehenden Ansprüche, **dadurch gekennzeichnet, dass** die Kraftfahrzeugbeleuchtungseinrichtung (4) eine Beleuchtungseinrichtung (6) für sichtbares Licht aufweist, die ein separates Bauteil von der Lichtquelle (32) ist und die insbesondere als Tagfahrlicht oder Abblendlicht ausgebildet ist, wohingegen die Lichtquelle (32) als Inszenierungsbeleuchtung und/oder als Positionslicht ausgeführt ist und/oder den Overhead-Wert und/oder das Tagfahrlicht unterstützt.
